Europäisches Patentamt

European Patent Office

Office européen des brevets

(11) Veröffentlichungsnummer: **0 230 892**
**A2**

(12) **EUROPÄISCHE PATENTANMELDUNG**

(21) Anmeldenummer: **87100263.0**

(22) Anmeldetag: **12.01.87**

(51) Int. Cl.³: **G 06 K 7/10**

(30) Priorität: **23.01.86 DE 3602008**

(43) Veröffentlichungstag der Anmeldung:
**05.08.87 Patentblatt 87/32**

(84) Benannte Vertragsstaaten:
**BE CH DE FR GB LI NL SE**

(71) Anmelder: **Erwin Sick GmbH Optik-Elektronik**
**Sebastian-Kneipp-Strasse 1**
**D-7808 Waldkirch(DE)**

(72) Erfinder: **Hippenmeyer, Heinrich**
**Unterberg 311**
**D-7831 Freiamt(DE)**

(74) Vertreter: **Dipl.-Phys.Dr. Manitz Dipl.-Ing., Dipl.-Wirtsch.**
**Finsterwald Dipl.-Chem.Dr. Heyn Dipl.-Phys. Rotermund**
**Morgan, B.Sc.(Phys.)**
**Robert-Koch-Strasse 1**
**D-8000 München 22(DE)**

(54) Optische Abtastvorrichtung mit einem Spiegelrad.

(57) Eine optische Abtastvorrichtung weist eine Laserlichtquelle (19) auf, die einen konvergierenden Laserstrahl (17) über ein polygonförmiges Spiegelrad (11) und eine streifenförmige Abtastoptik (21) auf eine abzutastende Abtastlinie (15) konzentriert. Wenigstens eine Spiegelfläche (13) des Spiegelrades weist eine gegenüber den übrigen Spiegelflächen (11) unterschiedliche Fokussierungseigenschaft auf. In einer an den Empfangsphotowandler (24) angeschlossenen Auswerteelektronik (25) werden lediglich die von scharfen Empfangslichtflecken (27) stammenden Empfangssignale für die Auswertung herangezogen.

FIG. 2

EP 0 230 892 A2

- 1 -

0230892

Die Erfindung betrifft eine optische Abtastvorrichtung insbesondere zur Abtastung und Erkennung von Mustern, wie optischen Marken und Strichcodierungen mit einer Laserlichtquelle, die einen Laserstrahl über ein im Brennpunkt einer streifenförmigen Abtastoptik, insbesondere eines streifenförmigen Hohlspiegels angeordnetes, polygonförmiges Spiegelrad und die streifenförmige Abtastoptik als Abtastlichtfleck auf eine parallel zur streifenförmigen Abtastoptik angeordnete Abtastlinie konzentriert, die sich auf der Oberfläche eines abzutastenden Materials befindet, und mit einer Empfangsanordnung, die von der vom Abtastlichtfleck gerade beaufschlagten Stelle der Oberfläche reflektiertes Licht erfaßt und einem Photowandler zuführt, der an eine Auswertelektronik angeschlossen ist, wobei wenigstens eine Spiegelfläche des Spiegelrades eine gegenüber den übrigen Spiegelflächen unterschiedliche Fokussierungseigenschaft aufweist, derart, daß die betreffende Spiegelfläche den Abtastlichtfleck um ein vorbestimmtes Stück vor oder hinter die Abtastlinie verschiebt, auf die der Abtastlichtfleck von den anderen Spiegelflächen konzentriert wird.

Derartige optische Abtastvorrichtungen werden z.B. zur Abtastung hochdichter Codierungen verwendet, wobei der Photowandler ein elektrisches Signal abgibt, welches für die von der vom Abtastlichtfleck beaufschlagten Stelle der Kodierung reflektierte Lichtintensität repräsentativ ist. Durch eine an den Photowandler angeschlossene Auswerteelektronik kann so eine Codierung erkannt werden. Werden derartige Codierungen in der Schärfenebene der Abtastvorrichtung abgetastet, so ergeben sich als Empfangssignale im wesentlichen Rechteckimpulse.

Normalerweise sind sämtliche Spiegelflächen eines Polygonspiegelrades eben ausgebildet, so daß nur in einer ganz bestimmte Ebene ein exakt fokussierter Laser-Abtastlichtfleck vorliegt. Außerhalb des Bereiches der Soll-Abtastlinie bzw. der Soll-Abtastebene ist die Strahlfokussierung unbefriedigend. Mit anderen Worten wird die für die Materialabtastung, insbesondere die Codeabtastung zur Verfügung stehende Tiefenschärfenzone durch die notwendigerweise relativ große Strahlöffnung begrenzt.

Das Ziel der Erfindung besteht darin, eine optische Abtastvorrichtung der eingangs genannten Gattung, insbesondere eine hoch auflösende Laser-Abtastvorrichtung zur Codeabtastung mit erheblich erweitertem Tiefenschärfenbereich zu schaffen.

Zur Lösung dieser Aufgabe sieht die Erfindung vor, daß die Auswerteelektronik eine Diskriminatorstufe enthält, welche auf die Schärfe des Empfangslichtfleckes anspricht und entscheidet, daß nur die vom schärfsten Abtastlichtfleck kommenden Signale in der Auswerteelektronik ausgewertet werden.

Besonders zweckmäßig ist es dabei, wenn diametral gegenüberliegende Spiegelflächen gleiche Fokussierungseigenschaften aufweisen.

Um die Bearbeitungskosten eines erfindungsgemäßen Spiegelrades niedrig zu halten, soll weiter vorgesehen sein, daß mindestens eine Spiegelfläche eben und mindestens eine Spiegelfläche konkav oder konvex gekrümmt ist.

Wenn die Tiefenschärfenzone um einen mittleren, durch ebene Spiegelflächen definierten Bereich herum schwanken soll, ist nach einer weiteren Ausführungsform vorgesehen, daß das Spiegelrad ebene, konkave und konvex gekrümmte Spiegelflächen aufweist.

Zweckmäßigerweise verläuft auch der Empfangsstrahlengang über das Spiegelrad, um auch insoweit die Abbildungstiefenschärfe wesentlich zu erweitern und somit am Photowandler auch bei Abstandsschwankungen zwischen der Abtastvorrichtung und der abzutastenden Codierung ein hiervon weitgehend unabhängiges elektrisches Ausgangssignal am Photowandler zu erhalten.

Um in Abhängigkeit von der Schärfe des Abtastlichtflecks unterschiedlich starke elektrische Signale am Ausgang des Photoempfängers zu erhalten, kennzeichnet sich eine weitere Ausführungsform dadurch, daß daß vor dem Photoempfänger eine Lochblende angeordnet ist und die Diskriminatorstufe einen Differenzierungs-Schwellwertschalter enthält, dessen SChwelle so eingestellt ist, daß durch Abtastungen außerhalb der Schärfenebene bedingte Abflachungen der Empfangsimpulsflanken nicht mehr ausreichen, die Schaltschwelle zu überwinden. Besonders vorteilhaft ist es, wenn der Differenzierungs-Schwellwertschalter sowohl auf ansteigende als auch auf abfallende Empfangsimpulsflanken anspricht.

Es ist zwar bereits ein optisches Fehlersuchgerät für in ihrer Längsrichtung bewegte Materialbahnen bekannt (DE-AS 29 25 734), bei der schon ein Spiegelrad mit unterschiedlicher Fokussierungseigenschaften aufweisenden Polygon-Spiegelflächen vorgesehen ist. Die unterschiedlichen Spiegelflächen des Spiegelrades dienen bei dem bekannten Gerät jedoch dazu, in einer festgelegten, sich nicht verändernden Abtastebene abwechselnd Lichtflecke unterschiedlicher Form und/oder Größe zu erzeugen, um auf diese Weise unterschiedliche Fehlerarten ermitteln zu können. Bei dem bekannten optischen

Fehlersuchgerät werden also sämtliche Empfangssignale, ob sie nun von einem scharfen kleinen oder unscharfen großen Lichtfleck kommen, ausgewertet und für die Fehlersuche herangezogen. Dabei wird von einer exakten Anordnung der zu untersuchenden Bahn in einer bestimmten Soll-Abtastebene ausgegangen.

Der vorliegenden Erfindung liegt ein grundsätzlich anderer Gedanke zugrunde, nämlich der, daß es z.B. bei der Strich-Code oder sonstigen Markenabtastung häufig vorkommt, daß sich die abgetasteten Muster nicht exakt in einer bestimmten Soll-Abtastebene befinden. Andererseits ist der Tiefenschärfebereich derartiger Laserstrahl-Abtastvorrichtungen sehr gering, so daß normalerweise an die optimale optische Positionierung des abgetasteten Strichcodes oder Musters hohe Anforderungen gestellt werden.

Erfindungsgemäß werden nun scharfe Abtastlichtflecke in mindestens zwei einen Abstand aufweisenden Ebenen erzeugt, und die Auswerteelektronik stellt selbst fest, welcher der beiden oder mehr erzeugten Abtastlichtflecke ausreichend scharf ist, um zur Auswertung herangezogen zu werden. Mit der vorliegenden Erfindung sollen also weder Fehler überhaupt noch gar unterschiedliche Fehlerarten ermittelt werden, sondern Muster optimal erfaßt und erkannt werden, auch wenn sie sich nicht genau in einer Sollabtastebene befinden.
Auch eine ebene Spiegelfläche ist im Sinne der Erfindung eine Spiegelfläche mit Fokkusierungseigenschaften, wobei in diesem Fall der Brennpunkt im Unendlichen liegt.

- 5 -

0230892

Die Erfindung wird im folgenden beispielsweise anhand der Zeichnung beschrieben; in dieser zeigt:

Fig. 1        ein erfindungsgemäßes Spiegelrad mit sechs Spiegelflächen,

Fig. 2        eine schematische Ansicht einer erfindungsgemäßen otischen Abtastvorrichtung mit einem Spiegelrad, welches vier Flächen mit unter- schiedlichen optischen Fokussierungseigen- schaften besitzt,

Fig. 3        den gleichen Gegenstand wie Fig. 2 bei um 90 ° verdrehtem Spiegelrad und

Fig. 4        ein Blockschaltbild einer bevorzugten Ausführungsform der Diskriminatorstufe nach den Fig. 2 und 3.

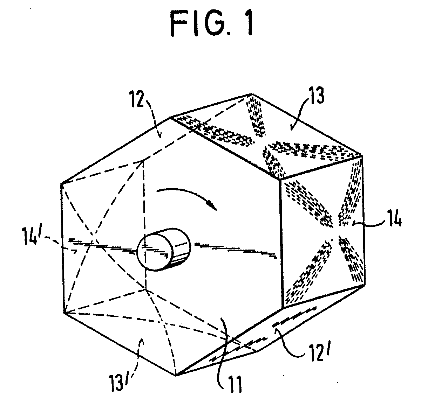

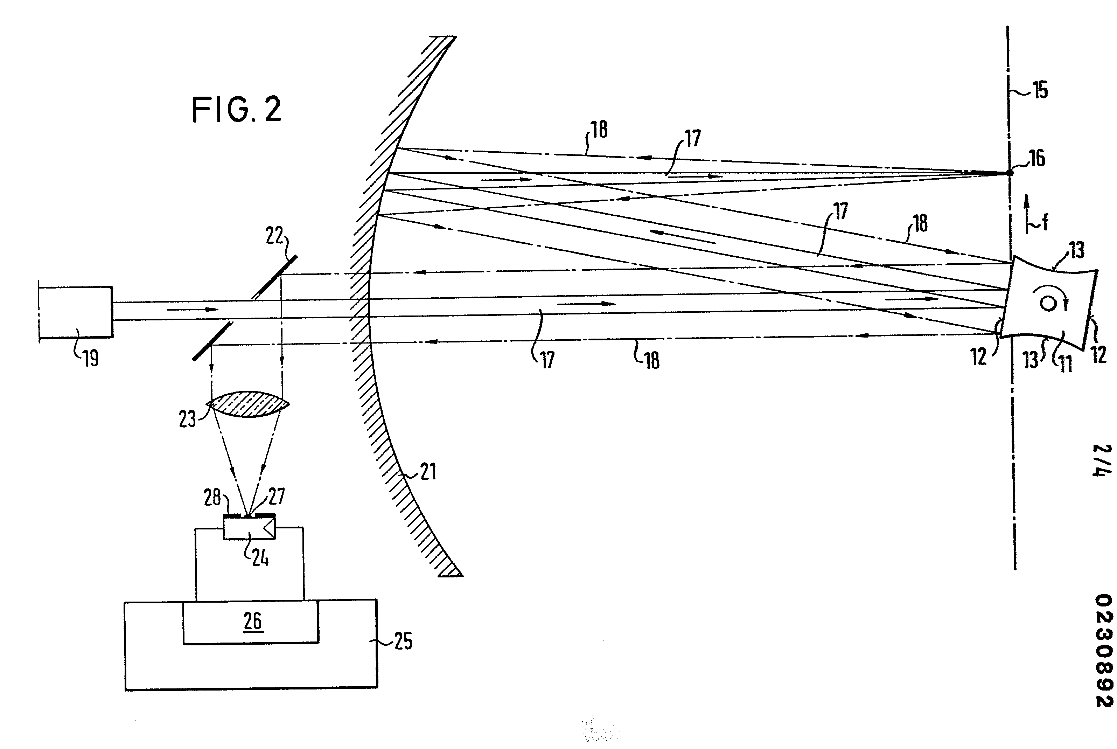

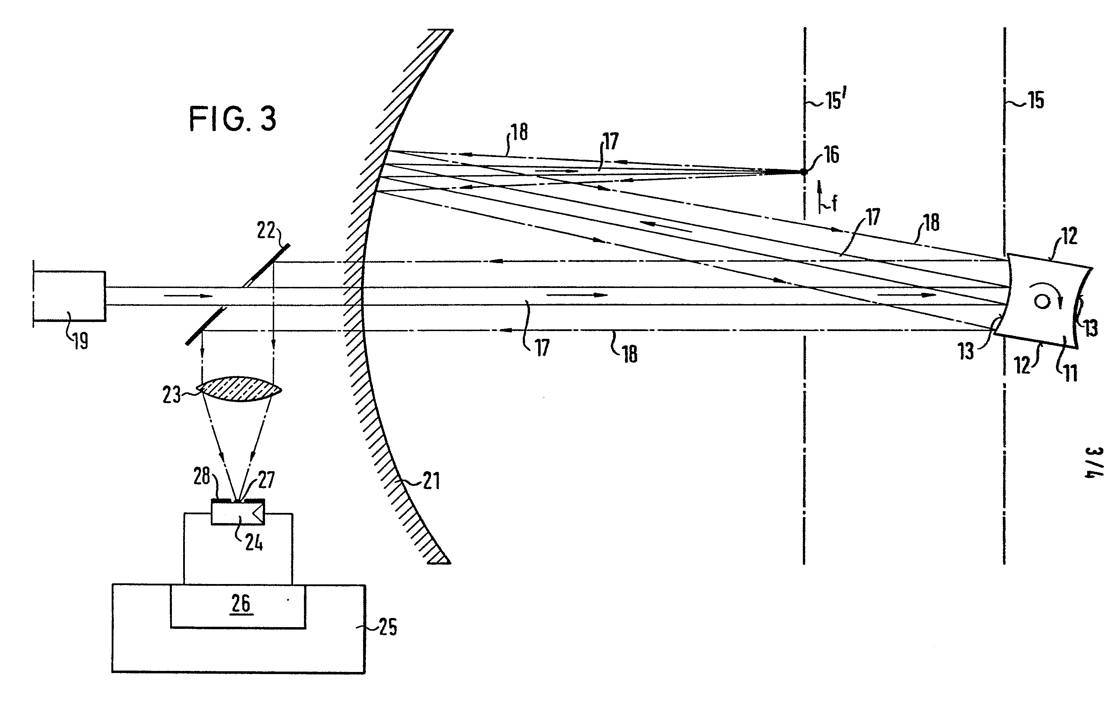

Nach Fig. 1 besitzt ein erfindungsgemäßes Spiegelrad 11 sechs gleiche, polygonartig angeordnete Spiegelflächen 12, 12'; 13, 13'; 14, 14'. Die diametral gegenüberliegenden Spiegelflächen 12 sind eben ausgebildet, während die diametral gegenüberliegenden Spiegelflächen 13 konkav und die diametral gegenüberliegenden Spiegelflächen 14 konvex gekrümmt sind. Je nachdem, welche der Spiegelflächen das von ihnen in einer optischen Abtastvorrichtung erfaßte Licht reflektiert, erfolgt die Fokussierung des reflektierten Laser-Lichtstrahls an unterschiedlichen Stellen innerhalb einer Tiefenschärfenzone. Diese Funktion wird im folgenden anhand der Fig. 2 und 3 erläutert, wobei der Einfachheit halber lediglich ein vierflächiges Spiegelrad 11 dargestellt ist, welches zwei diametral gegenüberliegende ebene Spiegelflächen 12 und zwei diametral gegenüberliegende konkave, hohlspiegelartige Spiegelflächen 13 aufweist.

Eine Laserlichtquelle 19 sendet ggf. über eine nicht dargestellte Strahlaufweitungsoptik einen Laser-Lichtstrahl 17
auf das Spiegelrad 11, welches sich bei Darstellung nach
Fig. 2 gerade in derjenigen Drehposition befindet, in
welcher der Laser-Lichtstrahl 17 auf eine ebene Spiegelfläche 12 auftrifft. Von dort wird der Laser-Lichtstrahl 17
zu einem streifenförmigen Hohlspiegel 21 reflektiert, in
dessen Brennpunkt sich die vom Licht beaufschlagte ebene
Spiegelfläche 12 befindet. Auf diese Weise wird der Laser-
Lichtstrahl 17 als parallel zum Eintrittslichtstrahl verlaufender Fahrstrahl auf einer Abtastlinie 15 in Form eines
Lichtfleckes 16 konzentriert, der bei Drehung des Spiegelrades 11 im Sinne des Pfeiles f in Fig. 2 entlang der Abtastlinie 15 eine Abtastbewegung periodisch
ausführt. Im Bereich der Abtastlinie 15 ist die Oberfläche
des vom Lichtfleck 16 abzutastenden Materials angeordnet,
welches z.B. eine Strichcodierung trägt, die erkannt werden
soll.

Das von der Materialoberfläche an der Stelle des Abtastlichtflecks 16 reflektierte Licht wird als Empfangsstrahl 18 über
den Hohlspiegel 21 auf die gleiche ebene Spiegelfläche 12
des Spiegelrades 11 gelenkt, auf die auch der Laser-Lichtstrahl 17 auftrifft. Es handelt sich also um einen Autokollimationsstrahlengang.

Unmittelbar vor dem Laser 19 ist ein Teilerspiegel 22 angeordnet,
der bei dem dargestellten Ausführungsbeispiel als geometrischer
Teilerspiegel ausgebildet ist. Er läßt den Laser-Lichtstrahl 17
durch und reflektiert einen äußeren Ausschnitt des Empfangsstrahls 18 auf eine Empfangsoptik 23, die das Empfangslicht
auf einem Photowandler 24 konzentriert, vor dem eine Lochblende 28
angeordnet ist.

Der Photowandler 24 ist an eine Auswerteelektronik 25 angeschlossen, die eine Dikriminatorstufe 26 enthält, welche eine Entscheidung trifft, ob der auf dem Photowandler 24 empfangene Empfangslichtfleck 27 für die anschließende Auswertung ausreichend scharf ist oder nicht. Für die Auswertung in der Auswertelektronik 25 freigegeben werden lediglich eine bestimmte Mindestschärfe aufweisende Empfangslichtflecke 27.

Zur Feststellung der Schärfe kann die Blende 28 dienen, denn, je unschärfer der Lichtfleck 27 ist, umso mehr von dem Licht fällt auf die Blende 28, so daß das Empfangssignal entsprechend schwächer wird.

Aufgrund der mit zunehmendem Herauswandern des abgetasteten Gegenstandes aus der Schärfenebene der Abtastvorrichtung zunehmender Unschärfe des Abtastlichtfleckes 27 wird aber nicht nur der Absolutwert des auf dem Photowandler 24 auftreffenden Lichtes herabgesetzt; wesentlich ausgeprägter ist die Abflachung der Flanken der Empfangsimpulse. Während bei Anordnung des abzutastenden Gegenstandes in der Schärfenebene im wesentlichen Rechteckimpulse empfangen werden, nehmen die Impulse beim Herauswandern des Gegenstandes aus der Schärfenebene zunehmend dreicks- ähnliche Formen mit mehr oder weniger abgeflachten Flanken an. Durch die Erfassung der Abflachung der Empfangsimpulsflanken kann das Herauswandern eines Gegenstandes aus der Schärfenebene wesentlich empfindlicher als durch die Intensitätsänderungen erfaßt werden.

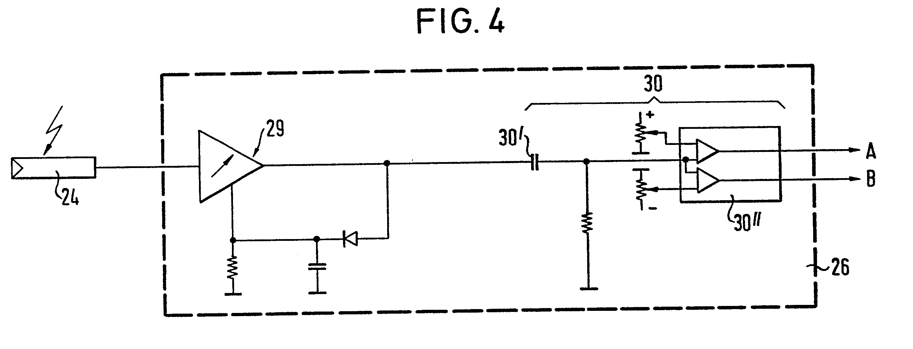

Fig. 4 zeigt ein für die Erfassung der Abflachung der Impulsflanken besonders geeignete Ausführungsform der Diskriminatorstufe 26. Das Ausgangssignal des Photowandlers 24, dem gegebenenfalls auch die Blende 28 nach den Fig. 2 und 3 vorgeschaltet sein
kann, wird über einen geregelten Verstärker 29 an einen Differenzierungs-Schwellwertschalter 30 angelegt, der aus einem RC-Glied
mit einem Kondensator 30' und einem Zweifach - Schwellwertschalter
30" besteht.

Die Empfangsimpulse 24 werden folglich, nachdem sie durch den
geregelten Verstärker auf ein vorbestimmtes Niveau gebracht
wurden, zunächst durch das RC-Glied mit dem Kondensator 30'
differenziert. Die dabei entstehenden Signale werden umso niedriger,
je flacher die Flanken der Empfangsimpulse sind. In dem Zweifach-
Schwellwertschalter 30" werden dann die differenzierten positiven
und negativen Impulse getrennt erfaßt und auf ihre Höhe überprüft.
An den Ausgängen A und B erscheinen dann Signale, wenn die
positiven bzw. negativen Flanken der Empfangsimpulse eine vorbestimmte Steilheit überschreiten. Unterschreiten die Steilheiten
der Flanken der Empfangsimpulse die vorbestimmte Steilheit, so
erscheint an den Ausgängen A und B kein Signal.

Die aus Fig. 4 ersichtliche Schaltung liefert also nur dann von
der abgetasteten Codierung abgeleitete Ausgangs- bzs. Erkennungssignale,
wenn sich diejenige Spiegelfläche des Spiegelrades 11 im
Strahlengang befindet, die am Ort des abgetasteten Gegenstandes einen weitgehend scharfen Abtastlichtfleck 16 erzeugt.

Die erfindungsgemäße Schaltung sucht sich somit selbst die
zur Erkennung der Codierung besonders geeigneten Empfangssignale heraus. Aufgrund der hohen Drehzahl des Spiegelrades
11 spielt der Ausfall jedes zweiten oder dritten Empfangssignals
für die Auswertung keine Rolle, zumal die abgetasteten Gegenstände im allgemeinen mit vergleichsweise geringer Geschwindigkeit an der Abtastvorrichtung vorbeigeführt werden.

0230892

Die optische Wirkungsweise der erfindungsgemäßen Vorrichtung
ist wie folgt:

Wird in der Darstellung der Fig. 2 das Spiegelrad 11 um
90 ° im Uhrzeigersinn gedreht, so erhält man diejenigen
Abbildungsverhältnisse, die in Fig. 3 veranschaulicht
sind. Aufgrund der konkaven Ausbildung der Spiegelfläche
13 wird jetzt der Laser-Lichtstrahl 17 auf einer Linie
15' konzentriert, die sich in einem deutlichen Abstand
vor der Abtastlinie 15 nach Fig. 2 befindet. Entsprechend
wird auch von dieser Abtastlinie 15' reflektiertes Licht
optimal auf den Photowandler 24 konzentriert.

Aufgrund dieser Ausbildung wird jede Materialoberfläche,
die sich zwischen den Abtastlinien 15 und 15' befindet von
einem optimal fokussierten Laser-Lichtstrahl zumindest bei
irgendeiner Drehposition des Spiegelrades 11 beaufschlagt.
Entsprechend erfolgt auch eine optimale Lichtkonzentration
des reflektierten Lichtes auf den Photowandler 24.

Der optische Teil der Vorrichtung stellt also zumindest bei
jeder ganzen Umdrehung des Spiegelrades einmal einen scharfen
Empfangslichtfleck 27 am Photowandler 24 zur Verfügung, welcher
aufgrund der unterscheidenden Eigenschaften der Diskriminatorstufe 26 für die Auswertung in der Auswerteelektronik 25 herangezogen wird, während die unscharfen Lichtflecke ausgeschieden und bei der Auswertung nicht berücksichtigt werden.
Wie das im einzelnen geschehen kann, ist oben anhand der Fig. 4
erläutert worden.

Patentansprüche

1. Optische Abtastvorrichtung insbesondere zur Abtastung und Erkennung von Mustern, wie optischen Marken und Strich - codierungen mit einer Laserlichtquelle, die einen Laserstrahl über eine im Brennpunkt einer streifenförmigen Abtastoptik, insbesondere eines streifenförmigen Hohlspiegels angeordnetes, polygonförmiges Spiegelrad und die streifenförmige Abtastoptik als Abtastlichtfleck auf eine parallel zur streifenförmigen Abtastoptik angeordnete Abtastlinie konzentriert, die sich auf der Oberfläche eines abzutastenden Materials befindet, und mit einer Empfangsan- ordnung,die von der vom Abtastlichtfleck gerade beaufschlagten Stelle der Oberfläche reflektiertes Licht erfaßt und einem Photowandler zuführt, der an eine Auswertelektronik angeschlossen ist, wobei wenigstens eine Spiegelfläche des Spiegelrades eine gegenüber den übrigen Spiegelflächen unterschiedliche Fokussierungseigenschaft
aufweist, derart, daß die betreffende Spiegelfläche
den Abtastlichtfleck um ein vorbestimmtes Stück vor
oder hinter die Abtastlinie verschiebt, auf die der Abtastlichtfleck von den anderen Spiegelflächen konzentriert
wird, dadurch g e k e n n z e i c h n e t, daß die Auswerteelektronik (25) eine Diskriminatorstufe (26) enthält,
welche auf die Schärfe des Empfangslichtfleckes (27)
anspricht und entscheidet, daß nur die vom schärfsten
Abtastlichtfleck (27) kommenden Signale in der Auswerteelektronik (25) ausgewertet werden.

2. Vorrichtung nach Anspruch 1,
   dadurch g e k e n n z e i c h n e t, daß diametral gegenüberliegende Spiegelflächen (12, 13) gleiche Fokussierungseigenschaften aufweisen.

3. Vorrichtung nach Anspruch 1 oder 2,
   dadurch g e k e n n z e i c h n e t, daß mindestens eine
   Spiegelfläche (12) eben und mindestens eine Spiegelfläche
   (13) konkav oder konvex gekrümmt ist.

4. Vorrichtung nach einem der vorhergehenden Ansprüche,
   dadurch g e k e n n z e i c h n e t, daß das Spiegelrad
   (11) ebene (12), konkave (13) und konvexe (14) Spiegelflächen aufweist.

5. Vorrichtung nach einem der vorhergehenden Ansprüche,
   dadurch g e k e n n z e i c h n e t, daß auch der Empfangsstrahlengang (18) über das Spiegelrad (11) verläuft.

0230892

6. Vorrichtung nach einem der vorhergehenden Ansprüche,
   dadurch g e k e n n z e i c h n e t, daß vor dem Photoempfänger (24) eine Lochblende (28) angeordnet ist und
   die Diskriminatorstufe (16) einen Differenzierungs-
   Schwellwertschalter (30) enthält, dessen Schwelle so eingestellt ist, daß durch Abtastungen außerhalb der Schärfenebene bedingte Abflachungen der Empfangsimpulsflanken nicht
   mehr ausreichen, die Schaltschwelle zu überwinden.

7. Vorrichtung nach Anspruch 6,
   dadurch g e k e n n z e i c h n e t, daß der Differenzierungs-
   Schwellwertschalter (30) sowohl auf ansteigende als auch auf
   abfallende Empfangsimpulsflanken anspricht.

FIG. 1

FIG.2

FIG. 3

0230892

# FIG. 4